(19) **Europäisches Patentamt / European Patent Office / Office européen des brevets**

(11) **EP 1 759 327 B1**

(12) **FASCICULE DE BREVET EUROPEEN**

(45) Date de publication et mention de la délivrance du brevet:
**11.04.2018 Bulletin 2018/15**

(21) Numéro de dépôt: **05742815.3**

(22) Date de dépôt: **17.05.2005**

(51) Int Cl.:
*G06K 7/08* (2006.01)  *G06K 19/07* (2006.01)
*G01V 15/00* (2006.01)  *H04B 5/00* (2006.01)

(86) Numéro de dépôt international:
**PCT/EP2005/052259**

(87) Numéro de publication internationale:
**WO 2005/124658 (29.12.2005 Gazette 2005/52)**

(54) **PROCÉDÉ DE DÉMODULATION SANS CONTACT À PHASE SYNCHRONE, LECTEUR ASSOCIÉ**

KONTAKTLOSES SYNCHRONPHASENDEMODULATIONSVERFAHREN UND ASSOZIIERTER LESER

CONTACTLESS, SYNCHRONOUS PHASE DEMODULATION METHOD, AND ASSOCIATED READER

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.06.2004 FR 0451284**

(43) Date de publication de la demande:
**07.03.2007 Bulletin 2007/10**

(73) Titulaire: **Gemalto SA**
**92190 Meudon (FR)**

(72) Inventeurs:
• **CARUANA, Jean-Paul**
  **Chemin Joseph Aiguier,**
  **F-13009 Marseille (FR)**
• **GUINET, Alain**
  **F-83330 Le Bausset (FR)**
• **CAPOMAGGIO, Grégory**
  **"Le Phenix" Bat. C,**
  **F-13008 Marseille (FR)**

(74) Mandataire: **Milharo, Emilien et al**
**Gemalto SA**
**Département Propriété Intellectuelle**
**Avenue du Jujubier**
**BP 90, Z.I. Athélia IV**
**13705 La Ciotat (FR)**

(56) Documents cités:
**US-A- 6 028 503    US-A- 6 049 292**

EP 1 759 327 B1

**Description**

L'invention concerne un procédé et système de démodulation pour lecteur de transpondeurs sans contact. Plus particulièrement, l'invention s'intéresse à une amélioration des communications entre un lecteur et un transpondeur.

Par transpondeur, il faut comprendre, dans le cadre de la description qui va suivre, tout appareil d'identification apte à être détecté ou communiquer à l'aide d'un champ électromagnétique. Les différents appareils peuvent être par exemple des cartes à puce ou des étiquettes électroniques de type sans contact comportant une interface de communication à antenne. Dans la présente demande, on s'intéresse plus particulièrement aux transpondeurs électromagnétiques comportant une bobine connectée à un condensateur ou à un circuit intégré ou à d'autres composants électroniques.

Par lecteur, il faut comprendre, dans le cadre de la description qui va suivre, un dispositif émetteur/récepteur muni d'une antenne qui crée un champ électromagnétique à une fréquence donnée. L'antenne du dispositif permet également de moduler le champ électromagnétique et de mesurer des variations du champ électromagnétique. L'antenne du lecteur est généralement constituée d'une ou plusieurs bobines.

Le système lecteur-transpondeur fonctionne de manière plus ou moins complexe suivant le type de transpondeur utilisé. Le principe général de fonctionnement consiste en l'émission d'un champ électromagnétique de fréquence donnée. Lorsqu'un transpondeur entre dans le champ électromagnétique, il est alors alimenté et il réagit. La réaction du transpondeur provoque une variation du champ électromagnétique qui est détectée par le lecteur.

Pour les systèmes les plus complexes, le transpondeur comporte par exemple un circuit intégré connecté à une bobine, la bobine et le circuit intégré formant entre autre un circuit résonant accordé. La présence du transpondeur dans le champ électromagnétique alimente le circuit intégré qui module le champ électromagnétique pour signaler sa présence au lecteur. Puis un dialogue peut s'effectuer entre le transpondeur et le lecteur par modulation du champ électromagnétique. Ces systèmes sont connus sous le nom de carte à puce sans contact ou étiquettes électroniques et sont utilisées pour de nombreuses applications.

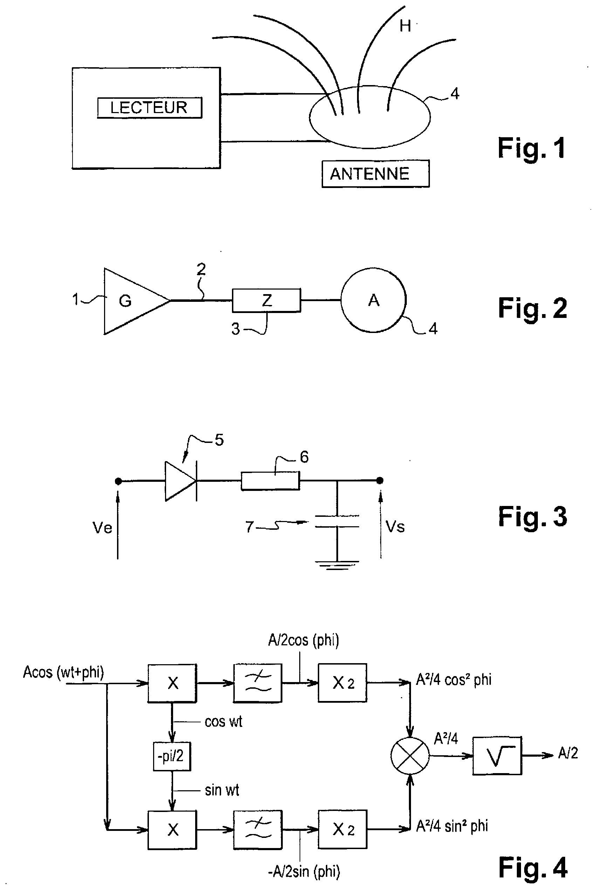

Le lecteur (figure 1) est généralement constitué d'un générateur de courant ou tension de fréquence fixe et d'une antenne réalisée par exemple par une bobine plate circulaire comprenant au moins un tour. Dans le cas qui nous intéresse (produit de la norme ISO/IEC 14443) cette fréquence est de 13,56 MHz. Elle peut être différente selon les domaines techniques considérés.

L'antenne lecteur peut être assimilée à un conducteur, lorsque celui-ci est parcouru par un courant, un champ magnétique est généré. L'orientation du champ magnétique est définie par le sens de parcours du courant. La boucle de courant formé par le conducteur une fois parcourue par ce courant présente un pôle Nord sur une face et un pôle Sud la face opposée.

Lorsqu'un transpondeur est soumis à ce champ lecteur, du fait de sa propre bobine, il est, lui aussi assimilable à un conducteur qui se déplace dans un champ magnétique. Quand un conducteur se déplace dans un champ magnétique, en coupant des lignes de flux, une f.e.m est induite dans le conducteur. De la même manière une tension f.e.m est induite si le flux varie à travers un circuit fixe. Dans tous les cas, cette tension f.e.m induite et le taux de variation du flux sont lié par la loi de Faraday: e = -dphi / dt.

La figure 2 représente un système lecteur généralement utilisé de l'art antérieur. Il est constitué d'un générateur 1 destiné à produire un courant à une fréquence donnée, d'un câble de liaison, 2, d'un circuit d'adaptation d'impédance 3 et d'une antenne 4. Le générateur est caractérisé par la puissance qu'il est capable de fournir sur une charge d'impédance adaptée. Cette impédance est en général d'une valeur de 50 ohms, elle correspond à l'impédance de sortie du générateur (1). Le circuit d'adaptation (3) est nécessaire pour transmettre dans l'antenne (4) la puissance maximale que peut délivrer le générateur (1).

Le système lecteur-transpondeur fonctionne de manière plus ou moins complexe suivant le type de transpondeur utilisé. Lorsqu'un transpondeur entre dans le champ électromagnétique, il est alors alimenté et il réagit. La réaction du transpondeur provoque une variation du champ électromagnétique qui est détectée par le lecteur.

Pour les systèmes les plus simples, le transpondeur étant par exemple constitué d'une bobine et d'un condensateur, l'ensemble forme un circuit oscillant accordé sur la fréquence du champ électromagnétique. La présence du transpondeur dans le champ fait résonner le circuit oscillant et provoque une modification du champ qui est détectable par le lecteur. Ces systèmes, très simples, sont couramment utilisés comme anti-vol dans les magasins.

Un problème majeur des systèmes à transpondeur et lecteur est de fournir au transpondeur l'énergie nécessaire à son fonctionnement avec un rendement maximum tout en réduisant la puissance de rayonnement du lecteur sans réduire les distances de transmission entre l'antenne et le transpondeur.

Pour les transpondeurs à circuit intégré, le problème devient très complexe car le champ électromagnétique sert d'une part à alimenter le circuit intégré et d'autre part de fréquence porteuse pour établir une communication mono ou bi-directionnelle entre le transpondeur et le lecteur. En effet, l'utilisation de ce champ magnétique pour ces deux usages entre en contradiction.

Pour pouvoir effectuer des communications, il faut moduler le champ électromagnétique en fréquence et/ou en amplitude. Cependant, l'homme du métier sait que lorsque la puissance du champ électromagnétique émis par l'antenne est trop important, alors le lecteur devient moins sensible aux variations d'amplitude de ce champ provoquées par la variation de charge induite par le transpondeur. C'est un problème de rapport signal sur bruit. Il est également connu de l'homme de métier, que l'augmentation de la puissance d'émission du champ électromagnétique crée un échauffement dans le circuit intégré qui peut entraîner sa destruction partielle, temporaire, totale ou définitive.

Il est encore connu que lorsque la bobine du transpondeur est accordée sur la même fréquence que l'antenne lecteur (qui est de préférence la fréquence de transmission pour avoir un bon rendement d'émission), il existe des trous de communication. Ce problème important peut intervenir tout au long de la distance normale de fonctionnement et non pas hors des limites prévues. En effet en fonction du couplage transpondeur lecteur, les variations de charge induites par le transpondeur sur le champ magnétique, vues à travers l'antenne lecteur, peuvent être égales, que le transpondeur agisse ou n'agisse pas sur le champ électromagnétique. Il en découle que le lecteur ne peut pas décoder le message. Ce problème lecteur est plus ou moins important en fonction du choix de la méthode de démodulation qu'il utilise.

En effet, ce problème de "trou de communication" est cruciale est s'explique par une analyse fine du système défini par le lecteur et le transpondeur.

Si l'on reprend le schéma de la figure 2, on constate que l'état de l'art consiste à générer un signal sinusoïdal de fréquence fixe (pour la norme ISO/IEC 14443 de 13,56 MHz) qui est injecté après adaptation d'impédance dans une antenne, généralement constitué d'un conducteur comprenant une ou plusieurs spire. Comme précédemment décrit, le courant circulant à travers ce conducteur produira un champ magnétique H de même fréquence. Ce champ, du fait de la partie inductive de l'antenne lecteur ne sera pas en phase avec le courant issu du générateur mais plutôt en opposition de phase.

En l'absence de tout couplage entre l'antenne lecteur et un transpondeur, le déphasage décrit plus haut reste fixe.

Cependant, dés qu'un transpondeur entre dans le champ H issu de l'antenne lecteur, un couplage apparaît et les caractéristiques inductives de l'antenne lecteur en sont modifiées. Il en résulte alors une variation du déphasage entre le champ H et le signal produit par le générateur.

Ce déphasage n'est plus constant. Il dépend du couplage et donc de la position du transpondeur par rapport à l'antenne, de la consommation de ce dernier qui varie en fonction des opérations qu'il effectue et des éléments non linéaires qui le constitue.

Ces variations de phase provoquent des ruptures dans la communication lecteur/ transpondeur. Dans le meilleur des cas (démodulateur à double détection synchrone), elles provoqueront un affaiblissement du signal vu du lecteur. Dans le pire des cas, (détection synchrone simple ou démodulation directe) le signal issu du transpondeur sera invisible au lecteur.

Plusieurs méthodes de démodulation sont utilisées à ce jour par les lecteurs pour décoder le message renvoyé par le transpondeur.

La méthode la plus simple est une démodulation directe (figure 3) réalisée à partir d'un simple composant non linéaire tel une diode (5) associée à une résistance 6 et un condensateur de filtrage (7);

La plus sophistiquée met en oeuvre une double détection synchrone dite I/Q tel que représentée par la figure 4.

Dans le cas de la démodulation directe (figure 3), le démodulateur est sensible à la variation d'impédance de la charge qui se trouve à son entrée (Ve). Cette impédance est représentée par un nombre complexe qui comprend 2 parties : une partie réelle et une partie imaginaire. Ce type de démodulateur est sensible à la variation du module (de la longueur) du vecteur représenté par ce nombre complexe. Cette longueur varie au rythme du message renvoyé par le transpondeur. Deux longueurs $Z1$ et $Z2$, existent pour un couplage donné. L'amplitude du signal démodulé correspond à la différence de longueur de ces deux vecteurs.

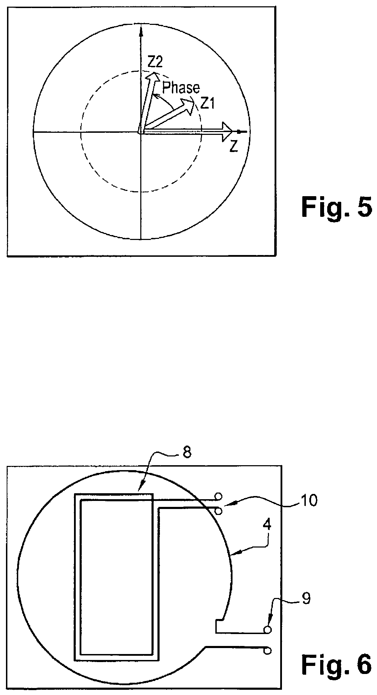

La figure 5 montre cependant que 2 vecteurs différents peuvent avoir des longueurs égales. Chacun des cercles où les longueurs de $Z1$ et $Z2$ sont égales correspond à un "trou de communication". En effet, les deux longueurs étant égales, le démodulateur ne verra aucune différence entre les deux états logiques pris par le transpondeur. L'influence de la phase apparaît comme l'un des paramètres de ce dysfonctionnement.

L'usage d'un démodulateur à détection directe dans le cadre d'un lecteur de transpondeur sans contact peut provoquer des ruptures totales de communication en fonction du couplage entre l'antenne lecteur et le transpondeur.

Dans le cas du démodulateur le plus sophistiqué (double détection synchrone type I / Q) tel que décrit par la figure 4, I1 a été trouvé que le déphasage induit par le transpondeur peut provoquer un affaiblissement de l'amplitude du signal démodulé. Cet affaiblissement peut atteindre un facteur de 0,707 par rapport au signal maximum.

Ce maximum d'affaiblissement est atteint lorsque la phase du champ H est déphasée de n/4 par rapport au signal issu du générateur. Une boucle à verrouillage de phase (PLL) est capable de restituer la fréquence de la porteuse avec une amplitude constante, par contre, subsiste une différence de phase "phi" entre la fréquence de la porteuse et la fréquence restituée.

Ainsi, un lecteur de transpondeur sans contact, même équipé du plus perfectionné des dispositifs de démodulation d'amplitude, du fait des variations incontrôlés de la phase du champ H par rapport au signal produit par le lecteur, est susceptible de subir des ruptures de communication du a un affaiblissement du signal démodulé.

La norme ISO/IEC 10373-6 défini les méthodes de test appliquées aux lecteurs et transpondeur pour être conforme à la norme ISO/IEC 14443.

Pour être conforme à la norme au niveau de la communication vers le lecteur, un transpondeur doit produire un signal de rétro-modulation dont l'amplitude des bandes latérales est au moins égale a $30 / H^{1,2}$ (avec H amplitude du champ magnétique). Quant au lecteur, pour être conforme à la norme, il doit être capable de démoduler au moins un signal de cette amplitude, indépendamment de la phase.

Il apparaît que les procédés décrits précédemment n'en sont pas capables. En effet, un lecteur conforme à l'ISO/IEC 14443, capable de détecter une amplitude de message de $30 / H^{1,2}$ peut être incapable de détecter un transpondeur, pourtant lui aussi conforme à l'ISO/IEC 14443 si l'influence du transpondeur provoque une atténuation trop importante du signal modulé eu égard à la sensibilité du lecteur, notamment lors d'un écart de phase de n/4 où l'atténuation est maximale.

En conséquence, le problème technique à résoudre peut se définir de la manière ci-après.

Comme d'une part, la sensibilité en lecture des lecteurs de transpondeur sans contact est affectée indépendamment du principe de démodulation utilisé, par les variations de phase entre d'une part : le courant appliqué à l'antenne du lecteur et d'autre part celle du champ résultant. Et d'autre part, cet écart de phase est en plus variable en fonction de la distance entre le transpondeur et l'antenne du lecteur. Il en résulte un problème majeur : un affaiblissement, voir même une annulation complète de l'amplitude du signal démodulé pouvant entraîner des ruptures de communications entre le lecteur et le transpondeur lors des mouvements de ce dernier.

Le document US 6028 503 décrit un procédé de démodulation de signaux d'un champ électromagnétique induits par un transpondeur sans contact. Le procédé utilise un démodulateur synchrone comprenant des détections à des instants déterminés ts.

Le procédé mesure une période de déphasage tc d'un signal de référence DS du démodulateur avec le signal induit HF-M du transpondeur et ajoute au moins deux fois cette période de déphasage tc et une constante tk à chaque instant correspondant à un front montant du signal de référence pour déterminer les instants ts de détection du démodulateur. L'invention vise donc à permettre la démodulation du signal issu d'un transpondeur indépendamment des variations de phase que ce dernier provoque sur le champ généré par le dispositif de lecture.

Le principe du procédé de l'invention consiste à asservir la détection du message du transpondeur à la phase du champ magnétique généré, ou à une valeur représentative de la phase (tension, courant...).

De préférence, le détecteur du démodulateur utilise comme signal d'horloge, un signal issu du champ magnétique pour synchroniser l'acquisition du message. De la sorte, toute variation de phase du champ induite par le transpondeur sera reportée au dispositif de démodulation. Dans ce procédé, ce n'est plus comme dans l'art antérieur, le signal d'horloge du générateur qui est utilisé comme référence de phase du démodulateur, mais un signal de même fréquence issu du champ magnétique H.

A cet effet, l'invention a d'abord pour objet un procédé de démodulation selon les revendications 1 à 5.

L'invention a également pour objet un lecteur de transpondeur selon les revendications 6 à 12.

D'autres caractéristiques et avantages de la présente invention apparaîtront à la lecture de la description suivante d'exemples particuliers de réalisation, ladite description étant faite avec les dessins joints dans lesquels :

- les figures 1 et 2 (déjà décrites) illustrent un lecteur sans contact de l'art antérieur;
- la figure 3 (déjà décrite) illustre un schéma électronique de lecteur mettant en oeuvre une démodulation directe de l'art antérieur;
- les figures 4 et 5 (déjà décrites) illustrent un schéma du principe de la démodulation a double détection synchrone I/Q de l'art antérieur;
- la figure 6 illustre un mode de réalisation de l'antenne lecteur selon l'invention;
- la figure 7 illustre un mode de réalisation analogique du lecteur de l'invention;
- la figure 8 illustre un résultat d'une opération de traitement relative à une mise en oeuvre du lecteur de la figure 7;
- la figure 9 illustre un mode de réalisation numérique du lecteur de l'invention.

Un des modes de réalisation de l'invention est présenté à la figure 6. Avantageusement l'asservissement pourra être réalisé à l'aide d'une bobine ou antenne additionnelle 8, comprenant au moins un tour, dont la valeur aura un effet de couplage négligeable sur l'antenne du lecteur (1) par rapport à celui d'un transpondeur.

Cette bobine est positionnée de manière à capter une partie du champ magnétique utilisé par le transpondeur. En particulier, elle pourra être rendue solidaire de l'antenne lecteur; De préférence, elle lui sera concentrique. Les plots de connexions 9 seront raccordés au circuit d'adaptation d'impédance de l'antenne lecteur, alors que les plots 10 seront utilisés pour ramener au lecteur un signal synchrone du champ H.

Le signal produit par cette bobine additionnelle synchrone du champ H sera utilisée pour échantillonner de façon analogique ou digitale le message du transpondeur.

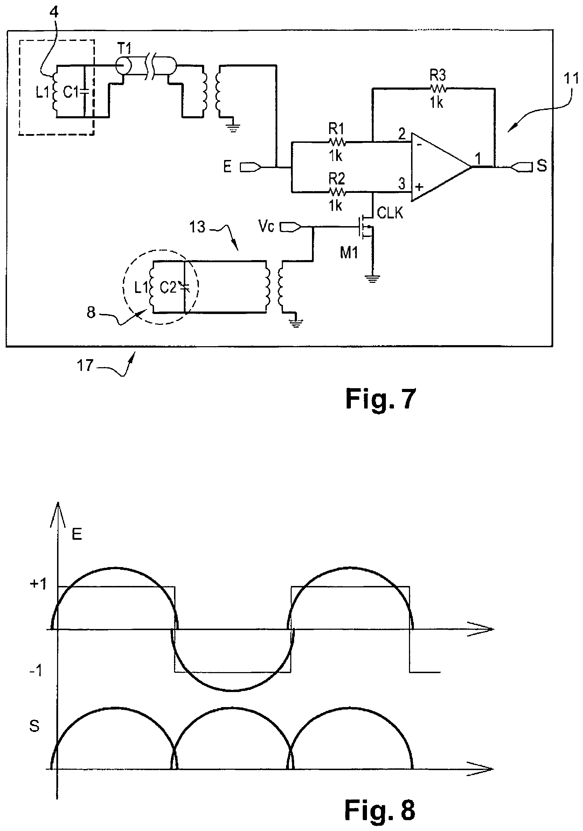

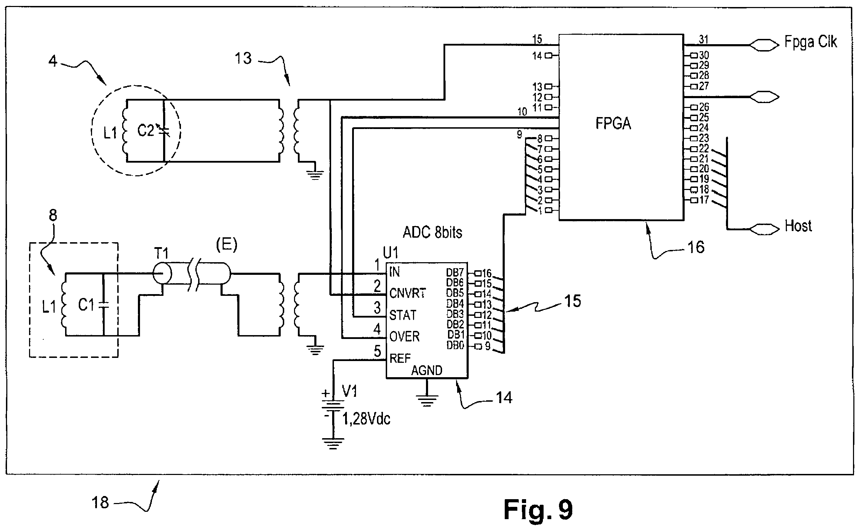

Les figures 7 et 9 présentent respectivement un mode de réalisation analogique et numérique du dispositif de lecture 17, 18 (antenne, lecteur). Dans le schéma de la figure 7, le message E issu de l'antenne lecteur 4 est injecté dans un multiplieur analogique 11 qui produira à sa sortie un signal S, le signal issu de la bobine additionnelle (8) après un étage d'adaptation de niveau 13 est traité par un déphaseur passif ajustable 12 (non représenté) destiné à compenser la partie fixe du déphasage lié à la chaîne d'acquisition. Ce signal est utilisé pour activer la commande de découpage (échantillonnage) appelée Vc injecté dans un transistor (FET) à effet de champ) (M1). Cette commande est tel que:

$$si \; Vc > 0 => S = +E$$

$$si \; Vc < 0 => S = -E$$

Cela revient à multiplier E par un signal créneau C de valeur +/-1 et $S(t) = E(t).C(t)$. Le résultat de cette opération est montré figure 8.

Cette fonction multiplieur analogique nous replace dans le cas d'une détection synchrone, Vc étant produit par la bobine additionnelle 8, la détection est asservie en phase avec le champ H auquel le transpondeur est soumis. Les problèmes de phases décrits dans le présent exposé disparaissent. L'acquisition rendue synchrone du champ et insensible aux variations de phases induites par le transpondeur lors de ses déplacements.

A la figure 9, à nouveau dans ce lecteur à détection synchrone numérique, le message E issu de l'antenne lecteur 4 est injecté à l'entrée d'un convertisseur analogique / numérique 14 destiné à échantillonner le signal E. Ce convertisseur sera choisi de façon à disposer d'une dynamique suffisante pour acquérir le message (12 bits). Le signal issu de la bobine additionnelle 8 après un étage d'adaptation de niveau 13 est également traité par un déphaseur passif ajustable destiné à compenser la partie fixe du déphasage lié à la chaîne d'acquisition. Ce signal est utilisé pour déclencher l'échantillonnage du convertisseur analogique numérique 14 au rythme de l'horloge capté du champ. Les échantillons acquis par le convertisseur à chaque déclenchement provoqué par l'entrée d'horloge sont disponibles sous forme numérique sur son bus de sortie 15, pour être traité par un moyen de traitement 16. Ce moyen de traitement peut être par exemple une unité de codage /décodage programmable (FPGA) ou un dispositif à microprocesseur.

Compte tenu que le procédé selon l'invention consiste à asservir la démodulation au moyen d'une information provenant du champ magnétique H produit par l'antenne lecteur, d'autres modes de réalisation peuvent avantageusement être utilisés. En effet, la bobine additionnelle (figure 6 - 3) peut être remplacée par un autre dispositif sensible non pas au champ magnétique H mais au champ électrique E. Dans ce cas, la bobine plate représentant un contour fermé devra être remplacée par une antenne dipôle sensible au champ électrique. Un étage d'adaptation et amplification sera alors nécessaire avant de ramener le signal à l'étage de démodulation.

Un autre mode de réalisation consiste à prélever une partie du courant circulant dans le conducteur ( figure 6 - 1) qui forme l'antenne lecteur, par exemple au moyen d'une faible charge (une résistance de très faible valeur : 0,2 ohms et de ramener cette l'information de phase après adaptation à l'étage de démodulation. En effet le courant circulant dans le conducteur est en phase avec le champ magnétique H puisqu'il en est la source.

Le procédé de l'invention peut ainsi compléter ceux décrits dans la norme ISO/IEC 10373-6 relatifs à des méthodes de test des produits sans contact afin de normaliser une référence de signal démodulé.

**Revendications**

1. Procédé de démodulation de signaux d'un champ électromagnétique (H) induits dans une antenne principale (4) d'un lecteur par un transpondeur sans contact, ledit procédé comprenant une étape de détection des signaux du transpondeur à des instants déterminés, **caractérisé en ce que** les instants déterminés de détection des signaux du transpondeur sont synchronisés avec une phase du champ électromagnétique (H), ou avec une valeur représentative de ladite phase.

2. Procédé de démodulation selon la revendication 1, **caractérisé en ce que** pour synchroniser, un flux induit par ledit champ électromagnétique (H) est capté dans une antenne additionnelle (8) par rapport à ladite antenne principale et une phase dudit flux induit est utilisée comme élément de synchronisation.

3. Procédé de démodulation selon la revendication 1, **caractérisé en ce que** pour synchroniser, une phase du courant générateur du champ électromagnétique est captée et utilisée comme élément de synchronisation.

4. Procédé de démodulation selon l'une revendication 2 ou 3, **caractérisé en ce que** les signaux du transpondeur sont détectés à une fréquence égale et en phase avec une fréquence du champ électromagnétique (H).

5. Procédé de démodulation selon l'une des revendications 2 à 4, **caractérisé en ce qu'**une horloge de synchronisation CLK est générée à partir de ladite phase captée du champ électromagnétique ou de son courant générateur et cette horloge est utilisée pour synchroniser une détection des signaux induits par ledit transpondeur.

6. Lecteur de transpondeur sans contact comprenant une antenne principale (4) d'émission / réception de champ électromagnétique, un démodulateur de signaux d'un champ électromagnétique induits par ledit transpondeur, ledit démodulateur comportant des moyens d'échantillonnage des signaux du transpondeur à des instants déterminés, **caractérisé en ce**

qu'il comporte des moyens de synchronisation (8, 12-16, C2, M1) aptes à synchroniser lesdits instants déterminés avec une phase du champ électromagnétique (H), ou avec une valeur représentative de ladite phase.

7. Lecteur de transpondeur sans contact selon la revendication 6, **caractérisé en ce que** les moyens de synchronisation comportent une antenne additionnelle (8) apte à capter une partie du champ électromagnétique (H) utilisé par le transpondeur, et un circuit de commande d'échantillonnage (Vc, M1) apte à générer un signal de commande de l'échantillonnage synchrone du champ électromagnétique (H).

8. Lecteur de transpondeur sans contact selon la revendication 6, **caractérisé en ce que** les moyens de synchronisation comportent une antenne additionnelle (8) sensible à un champ électrique (E) induit du transpondeur.

9. Lecteur de transpondeur sans contact selon la revendication 6, **caractérisé en ce que** les moyens de synchronisation comportent des moyens de dérivation de courant aptes à prélever une partie du courant circulant dans un conducteur formant l'antenne additionnelle du lecteur et d'en extraire une information de phase pour synchroniser l'échantillonnage.

10. Lecteur de transpondeur selon la revendication 7, **caractérisé en ce que** ladite antenne additionnelle (8) est désaccordée par rapport à l'antenne principale (4).

11. Lecteur de transpondeur selon quelconque des revendications 6 à 10, **caractérisé en ce que** le démodulateur est un démodulateur à détection synchrone.

12. Lecteur de transpondeur selon l'une quelconque des revendications 6 à 11, **caractérisé en ce que** la détection synchrone est numérique.


**Patentansprüche**

1. Verfahren zum Demodulieren von Signalen eines elektromagnetischen Feldes (H), das in einer Hauptantenne (4) eines Lesegeräts über einen kontaktlosen Transponder induziert wird, wobei das Verfahren einen Schritt der Erfassung der Transpondersignale zu bestimmten Zeitpunkten umfasst, **dadurch gekennzeichnet, dass** die festgelegten Zeitpunkte der Erfassung der Transpondersignale mit einer Phase des elektromagnetischen Felds (H) oder mit einem für diese Phase repräsentativen Wert synchronisiert werden.

2. Demodulationsverfahren nach Anspruch 1, **dadurch gekennzeichnet, dass** zur Synchronisation ein durch besagtes elektromagnetisches Feld (H) induzierter Fluss in einer, die besagte Hauptantenne ergänzenden Antenne (8) erfasst wird und eine Phase des besagten induzierten Flusses als Synchronisationselement benutzt wird.

3. Demodulationsverfahren nach Anspruch 1, **dadurch gekennzeichnet, dass** zur Synchronisation eine Phase des Stroms, welcher das elektromagnetische Feld generiert, als Synchronisationsselement erfasst und benutzt wird.

4. Demodulationsverfahren nach Anspruch 2 oder 3, **dadurch gekennzeichnet, dass** die Transpondersignale bei einer Frequenz erkannt werden, die gleich der Frequenz des elektromagnetischen Feldes (H) ist bzw. mit ihr phasengleich ist.

5. Demodulationsverfahren nach einem der Ansprüche 2 bis 4, **dadurch gekennzeichnet, dass** eine Synchronisationsuhr CLK ausgehend von besagter erfasster Phase des elektromagnetischen Felds oder seines generierenden Stroms generiert wird und diese Uhr zur Synchronisation der Erfassung der von besagtem Transponder induzierten Signale benutzt wird.

6. Kontaktloses Transponderlesegerät, welches eine Hauptantenne (4) zum Senden und Empfangen eines elektromagnetischen Feldes, einen Demodulator für das durch besagten Transponder induzierte elektromagnetische Feld umfasst, wobei der besagte Demodulator Mittel zum Abtasten der Transpondersignale zu bestimmten Zeitpunkten aufweist, **dadurch gekennzeichnet, dass** er Synchronisationsmittel umfasst (8, 12-16, C2, M1), die in der Lage sind, besagte bestimmte Zeitpunkte mit einer Phase des elektromagnetischen Feldes (H) oder mit einem für diese Phase repräsentativen Wert zu synchronisieren.

7. Kontaktloses Transponderlesegerät nach Anspruch 6, **dadurch gekennzeichnet, dass** die Synchronisationsmittel eine ergänzende Antenne (8) aufweisen, die in der Lage ist, einen Teil des vom Transponder benutzten elektromagnetischen Feldes (H) zu erfassen, und einen Abtaststeuerkreis (Vc, M1), der in der Lage ist, ein synchrones Abtaststeuersignal des elektromagnetischen Feldes (H) zu generieren.

8. Kontaktloses Transponderlesegerät nach Anspruch 6, **dadurch gekennzeichnet, dass** die Synchronisationsmittel eine ergänzende Antenne (8) aufweisen, die für ein durch den Transponder induziertes elektrisches Feld (E) sensibel ist.

9. Kontaktloses Transponderlesegerät nach Anspruch 6, **dadurch gekennzeichnet, dass** die Synchronisationsmittel Mittel zur Ableitung des Stroms aufweisen, die in der Lage sind, einen Teil des Stroms, welcher in dem die ergänzende Antenne des Lesegeräts bildenden Leiter fließt, zu entnehmen und daraus eine Phaseninformation zur Synchronisation der Abtastung zu entnehmen.

10. Transponderlesegerät nach Anspruch 7, **dadurch gekennzeichnet, dass** besagte ergänzende Antenne (8) nicht auf die Hauptantenne (4) abgestimmt ist.

11. Transponderlesegerät nach einem der Ansprüche 6 bis 10, **dadurch gekennzeichnet, dass** es sich bei dem Demodulator um einen Demodulator mit synchroner Erfassung handelt.

12. Transponderlesegerät nach einem der Ansprüche 6 bis 11, **dadurch gekennzeichnet, dass** die synchrone Erfassung digital erfolgt.

**Claims**

1. A method for demodulating signals of an electromagnetic field (H) that are induced in a main antenna (4) of a reader by a contactless transponder, said method comprising a step of detecting the signals from the transponder at given instants, **characterised in that** the given instants of detection of the signals from the transponder are synchronised with a phase of the electromagnetic field (H), or with a value representing said phase.

2. A demodulation method according to claim 1, **characterised in that**, in order to synchronise, a flow induced by said electromagnetic field (H) is captured in an additional antenna (8) with respect to said main antenna and a phase of said induced flow is used as a synchronisation element.

3. A demodulation method according to claim 1, **characterised in that**, in order to synchronise, a phase of the current generating the electromagnetic field is captured and used as a synchronisation element.

4. A demodulation method according to either claim 2 or claim 3, **characterised in that** the signals from the transponder are detected at a frequency equal to and in phase with a frequency of the electromagnetic field (H).

5. A demodulation method according to any of claims 2 to 4, **characterised in that** a synchronisation clock CLK is generated from said captured phase of the electromagnetic field or of its generating current and this clock is used to synchronise a detection of the signals induced by said transponder.

6. A contactless transponder reader comprising a main electromechanical-field transmission/reception antenna (4), a demodulator demodulating signals of an electromagnetic field induced by said transponder, said demodulator comprising means for sampling the signals from the transponder at given instants, **characterised in that** it comprises synchronisation means (8, 12-16, C2, M1) able to synchronise said given instants with a phase of the electromagnetic field (H), or with a value representing said phase.

7. A contactless transponder reader according to claim 6, **characterised in that** the synchronisation means comprise an additional antenna (8) able to capture part of the electromagnetic field (H) used by the transponder, and a sampling control circuit (Vc, M1) able to generate a signal controlling the synchronous sampling of the electromagnetic field (H).

8. A contactless transponder reader according to claim 6, **characterised in that** the synchronisation means comprise an additional antenna (8) sensitive to an induced electrical field (E) of the transponder.

9. A contactless transponder reader according to claim 6, **characterised in that** the synchronisation means comprise current-diversion means able to take off part of the current flowing in a conductor forming the additional antenna of the reader and to extract therefrom phase information for synchronising the sampling.

10. A transponder reader according to claim 7, **characterised in that** said additional antenna (8) is detuned with respect to the main antenna (4).

11. A transponder reader according to any of claims 6 to 10, **characterised in that** the demodulator is a synchronous-detection demodulator.

12. A transponder reader according to any of claims 6 to 11, **characterised in that** the synchronous detection is numeric.

Fig. 1

Fig. 2

Fig. 3

Fig. 4

**Fig. 5**

**Fig. 6**

**Fig. 7**

**Fig. 8**

Fig. 9

EP 1 759 327 B1

**EP 1 759 327 B1**

## RÉFÉRENCES CITÉES DANS LA DESCRIPTION

**Documents brevets cités dans la description**

- US 6028503 A